# EUROPEAN PATENT APPLICATION

(11) **EP 2 311 554 A1**
(43) Date of publication of application: **20.04.2011**
(21) Application number: 09012680.6
(22) Date of filing: 07.10.2009
(51) Int. Cl.: B01J 19/00, B01J 8/00

(54) **Method for reaction control of exothermic reaction and apparatus therefore**

(71) Applicant: Linde Aktiengesellschaft, 80331 München (DE)
(72) Inventor: Wellenhofer, Anton, 82069 Hohenschäftlarn (DE); Müller, Wolfgang, 81245 München (DE); Wöhl, Anina, 82049 Pullach (DE)
(74) Representative: Kasseckert, Rainer

(57) **Abstract**

The present invention relates to method for reaction control of an exothermic reaction, comprising the steps:
i) carrying out an exothermic reaction in a reactor to produce product,
ii) measuring temperature and/or pressure in the reactor, and
iii) introducing inert product already produced previously in the exothermic reaction from a storage container into the reactor, if temperature and/or pressure exceed(s) critical value(s).

as well as an apparatus for carrying out an exothermic reaction.

## Description

The present invention relates to a method for reaction control of an exothermic reaction and to an apparatus for carrying out an exothermic reaction.

It is important that a reactor containing an exothermic reaction be cooled for safety reasons as well as to ensure that the reaction proceeds efficiently.

The reaction rate of exothermic reactions, which are often catalytically driven, and therefore the released heat is expected to rise by an exponential function (Arrhenius exponential law), considering that the temperature is the only degree of freedom.

As it is known in the art, an exothermic reaction means a chemical reaction which is accompanied by evolution of heat.

The reaction, i.e. the reaction temperature of an exothermic reaction may be controlled by indirect or direct cooling of the reactor keeping the balance between released heat by the reaction and the removed heat by the cooling system. As the removable heat by a cooling system is normally in a nearly linear dependency from the reaction temperature (again considering the temperature as degree of freedom) reaching a certain temperature will inevitable lead to a not reversible accelerating reaction, the so called runaway.

It is also known in the art that runaways cannot be prevented for sure. Therefore, certain measures to handle runaways have been established. The common measures and the major drawbacks may be summarized as follows.

A catalyst poison for catalytically driven exothermic reactions may be added. This results, however, in loss of product, contamination of the reactor with poison and the subsequent necessity of cleaning of the reactor. Further, there is a challenging task of the satisfying distribution of the catalyst poison in time in the reactor to ensure a reaction decay.

A further measure is the so called block-in, i.e. possibly depressurization and/or drain of the reactor vessel by valves or bursting discs. This measure results in loss of product and the necessity of cleaning the reactor of runaway products. Often, there is also a need of after treatment of the released runaway product due to unwanted properties, for example polymerization or toxicity.

After a runaway, in general shut down and cleaning of the reactor is necessary before re-start. Therefore, runaway in most cases leads to a loss of production due to the runaway and due to the time needed for start-up preparation and re-start of the reactor and the formation of unwanted products.

It is an object of the present invention to provide a method for reaction control of an exothermic reaction which overcomes the drawbacks of the prior art, especially a method which prevents a certain number of runaways, minimizes the effect of a runaway, does not require a reactor shut-down and cleaning thereof as well as avoids contamination of the reactor with catalyst poisons and the like.

Additionally, it is an object to provide an apparatus for carrying out an exothermic reaction which allows implementation of the inventive method.

The first object is achieved by a method for reaction control of an exothermic reaction, comprising the steps:
i) carrying out an exothermic reaction in a reactor to produce product,
ii) measuring temperature and/or pressure in the reactor, and
iii) introducing inert product already produced previously in the exothermic reaction from a storage container into the reactor, if temperature and/or pressure exceed(s) critical value(s).

Preferably, the inert product is a liquid product.

Morever preferably, the exothermic reaction is oligomerization of olefins.

In a preferred embodiment the method comprises an additional step of stopping introducing reaction educt into the reactor.

Preferably, the step of stopping is substantially simultaneously to step (iii).

In a further embodiment the inert product is introduced into a liquid reaction phase in the reactor.

It is preferred that the inert product is injected into the reactor.

More preferred, the mass flow of the inert product to be introduced into the reactor is adjustable.

Furthermore, an apparatus carrying out an exothermic reaction is according to the invention comprising:
a) a reactor filled with reaction educt, optionally solvent and catalyst,
b) temperature and/or pressure sensor(s) within the reactor,
c) feed and discharge lines equipped with valves for feeding educt and discharge product into and from the reactor, respectively,
d) at least one storage container containing inert product and being connected with the reactor by a line equipped with a valve, and
e) a control unit connected with the sensor(s) and the valves.

In a preferred embodiment the reactor is a continuous, semi-continuous or discontinuous reactor.

Most preferably the inert product in the storage container is kept under higher pressure than the pressure in the reactor.

Surprisingly, it was found that the present invention provides a method for reaction control of an exothermic reaction having a runaway suppression system without contamination of the exothermic reaction process with process-foreign products. It was found that the inventive method prevents a certain number of runaways and limits the unwanted effect of a runaway, therefore improving the "on time" handling and the production of a reactor. In detail, the effect of a runaway can be minimized by not reaching excessively high reaction temperatures. The reactor can be kept in service, and a reduced formation of unwanted side products, for example polymers, is achieved, especially due to the fact that high reaction temperatures can be avoided.

There is further no need of a reactor shut-down and a cleaning thereof which minimizes the time until the reactor can be re-started.

Further, no contamination of the reactor with catalyst poison for catalytically driven exothermic reactions results, and therefore substantive cleaning after poison injection can be avoided.

In summary, the inventive method leads to a minimum overall product loss.

Preferably it was found that the inventive method is especially advantageous in exothermic reaction processes where the reaction is occurring in a liquid phase and/or the educt/feed is used as the main source of cooling, e.g. by direct cooling of the reactor. An example of an exothermic reaction where the method of the present invention can be successfully utilized is the oligomerization of ethylene.

Additional features and advantages of the method and the apparatus of the present invention can be taken from the following detailed description of preferred embodiments in connection with the drawing, wherein

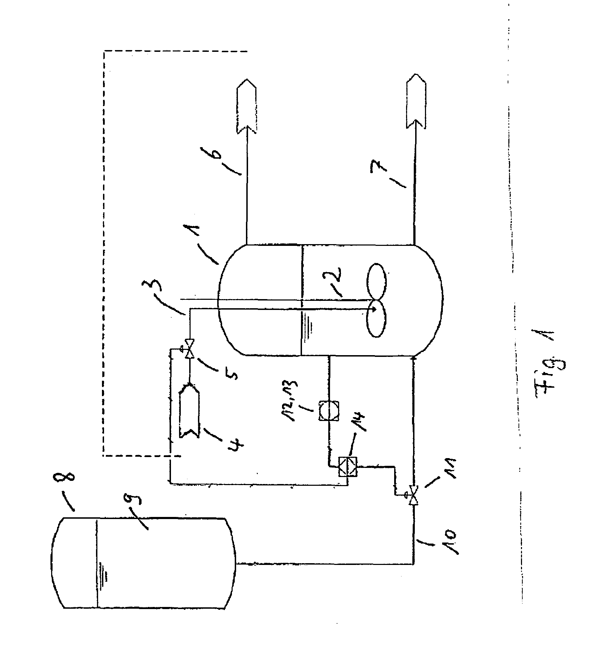

Figure 1 illustrates an apparatus design according to one embodiment for carrying out an inventive method for reaction control of an exothermic reaction.

In Figure 1 a reactor 1 is shown in which an exothermic reaction, for example the oligomerization of olefins, occurs in a liquid phase. A stirrer 2 is provided in the reactor 1 to stir the liquid phase. Via a feed line 3 educt, for example ethylene, can be introduced into the reactor from a feed storage 4. The feed line 3 can be opened and closed by a valve 5. Via discharge lines 6 and 7, gaseous and liquid products can be removed from the reactor 1.

A storage container 8 filled with inert product 9, for example oligomers, which inert product 9 has been already produced previously is connected with the reactor 1 via a feed line 10 which is openable and closable by a valve 11. The inert product 9 in the storage container 1 has preferably ambient temperature or below.

The reactor 1 also comprises temperature and pressure sensors 12, 13. The sensors 12, 13, the valve 5 and the valve 11 are connected with a control unit 14.

In operation, the apparatus can work as follows. An exothermic reaction is carried out in the reactor 1. Feed is introduced into the reactor 1 via feed line 3 which feed acts as direct cooling medium. Gaseous and liquid products can be removed from the reactor via discharge lines 6, 7. The temperature and the pressure within the reactor 1 are controlled by the control unit 14. If the control unit 14 detects that temperature and/or pressure within the reactor 1 exceed(s) predetermined critical value(s), the control unit 14 may open valve 11 to allow the introduction of inert, preferably liquid, product into the reactors which then acts as a direct cooling medium and suppresses further heating or pressurization of the reactor 1. Simultaneously with opening valve 11, valve 5 may be closed. By closing valve 5, the reaction will be suppressed by squeezing out the feed and therefore limiting the maximum reaction temperature and limiting the formation of unwanted products.

Using the inert product in the liquid state, the heat of vaporization thereof might be utilized for cooling down the reactor temperature.

If after introduction of inert product 9 into the reactor 1 temperature and pressure values are within ranges so that a runaway reaction is no longer possible, the exothermic reaction can be easily continued in the reactor 1, e.g. by normal startup-sequence. No complicated restart of the reactor 1 is necessary, nor reactor cleaning. Additionally, no product contamination has been occurred, the inert product 9 introduced for cooling down the reactor 1 can be easily removed from the reactor 1 by discharge lines 6 and 7.

The features disclosed in the foregoing description, the claims and the drawing may, both separately and in any combination thereof, be material for realizing the invention in diverse forms thereof.

## Claims

1. Method for reaction control of an exothermic reaction, comprising the steps:
i) carrying out an exothermic reaction in a reactor to produce product,
ii) measuring temperature and/or pressure in the reactor, and
iii) introducing inert product already produced previously in the exothermic reaction from a storage container into the reactor, if temperature and/or pressure exceed(s) critical value(s).

2. Method according to claim 1, wherein the inert product is a liquid product.

3. Method according to claim 1 or 2, wherein the exothermic reaction is oligomerization of olefins.

4. Method according to any of the preceding claims with the additional step of stopping introducting reaction educt into the reactor.

5. Method according to claim 4, wherein the step of stopping is substantially simultaneously to step (iii).

6. Method according to any of the preceding claims wherein inert product is introduced into a liquid reaction phase in the reactor.

7. Method according to any of the preceding claims wherein the inert product is injected into the reactor.

8. Method according to any of the preceding claims, wherein mass flow of the inert product to be introduced into the reactor is adjustable.

9. Apparatus for carrying out an exothermic reaction comprising:
a) a reactor filled with reaction educt, optionally solvent and catalyst,
b) temperature and/or pressure sensor(s) within the reactor,
c) feed and discharge lines equipped with valves for feeding educt and discharge product into and from the reactor, respectively,
d) at least one storage container containing inert product and being connected with the reactor by a line equipped with a valve, and
e) a control unit connected with the sensor(s) and the valve.

10. Apparatus according to claim 9, wherein the reactor is a continuous, semi-continuous or discontinuous reactor.

11. Apparatus according to claim 9 or 10, wherein the inert product in the storage container is kept under higher pressure than the pressure in the reactor.
